# EUROPÄISCHE PATENTSCHRIFT

(11) **EP 0 761 490 B1**
(45) Veröffentlichungstag und Bekanntmachung des Hinweises auf die Patenterteilung: **17.10.2001**
(21) Anmeldenummer: 96109831.6
(22) Anmeldetag: 19.06.1996
(51) Int. Cl.: B60K 41/02

(54) **Steuerung einer automatischen Kupplung**
Control of an automatic clutch
Commande d'un embrayage automatique

(30) Priorität: 21.08.1995 DE 19530613
(43) Veröffentlichungstag der Anmeldung: 12.03.1997
(73) Patentinhaber: DaimlerChrysler AG, 70567 Stuttgart (DE)
(72) Erfinder: Kosik, Franz, 73760 Ostfildern (DE); Wörner, Günter, 71394 Kernen (DE)

(56) Entgegenhaltungen:
- EP-A- 0 393 910
- DE-A- 3 939 615
- DE-A- 4 426 260
- GB-A- 2 158 912

## Beschreibung

Die Erfindung betrifft die Steuerung einer automatischen Kupplung zwischen Motor, insbesondere Verbrennungsmotor, und Antriebstrang eines Kraftfahrzeuges bei Kriechphasen, insbesondere Anfahrphasen bzw. Betriebsphasen mit Übergängen zwischen sehr geringer Fahrgeschwindigkeit und Halt.

Kraftfahrzeuge mit manuell geschalteten Getrieben und automatisch betätigter Kupplung sind allgemein bekannt und werden serienmäßig ausgeliefert. Dabei arbeitet die automatische Kupplung bei Anfahrphasen sowie Betriebsphasen mit Übergängen zwischen geringer Fahrgeschwindigkeit und Halt, d.h. bei sogenannten Kriechphasen, mit einem automatisch gesteuerten Schlupf, um ein ruckfreies Anfahren bzw. Beschleunigen nach der Anfahrphase sowie ein ruckfreies Anhalten zu ermöglichen.

Aus der DE 44 26 260 A1 ist es bekannt, gemäβ dem Oberbegriff des Anspruchs 1, die automatische Kupplung bei nicht betätigtem Fahrpedal so weit zu schließen, daß ein geringes Kupplungsmoment übertragen wird, welches ein Ankriechen des Fahrzeuges bewirkt.

Die EP 0 393 910 A2 zeigt eine automatische Kupplung, welche geöffnet wird, wenn das Fahrzeug anhält bzw. bis zu einem Stop abgebremst wird. Wenn das Fahrpedal bei geringer Fahrgeschwindigkeit betätigt wird, wird das Kupplungsmoment automatisch so gesteuert, daß sich eine vorgegebene Fahrgeschwindigkeit einstellt.

Aufgabe der Erfindung ist es nun, ein für Anfahr- bzw. Kriechphasen des Fahrzeuges besonders vorteilhaftes Konzept für eine automatisch gesteuerte Kupplung aufzuzeigen.

Diese Aufgabe wird erfindungsgemäß dadurch gelöst, daß, sobald ein Steuerorgan des Motors bzw. ein Fahrpedal fahrerseitig nicht betätigt wird und das Fahrzeug eine Fahrgeschwindigkeit unterhalb eines geringen Schwellwertes hat und ein für das Anfahren des Fahrzeuges geeigneter Gang des Getriebes eingelegt ist, das Kupplungsmoment so geregelt wird, daß sich eine vorgegebene geringe Fahrgeschwindigkeit unterhalb des genannten Schwellwertes einstellt.

Die Erfindung beruht auf dem allgemeinen Gedanken, während der Kriechphase die automatische Kupplungssteuerung im Sinne einer Geschwindigkeitsregelung durchzuführen, um auf diese Weise ein unter verschiedenartigen Betriebsbedingungen gleichmäßiges Kriechverhalten des Fahrzeuges zu gewährleisten.

Bei der Erfindung wird mit Vorteil ausgenutzt, das heutige Motoren von Kraftfahrzeugen regelmäßig mit einer Motorregelung ausgerüstet sind, die einem Abfall der Ist-Betriebsdrehzahl des Motors unter eine Mindestsolldrehzahl - in der Regel die Leerlaufsolldrehzahl - entgegensteuert, d.h. die genannte Mindestbetriebsdrehzahl bleibt auch bei höherer Belastung des Motors ohne Zutun des Fahrers erhalten.

Auf diese Weise kann sowohl in der Ebene als auch an Steigungen mit der Erfindung ein nahezu konstantes Kriechverhalten des Fahrzeuges gewährleistet werden.

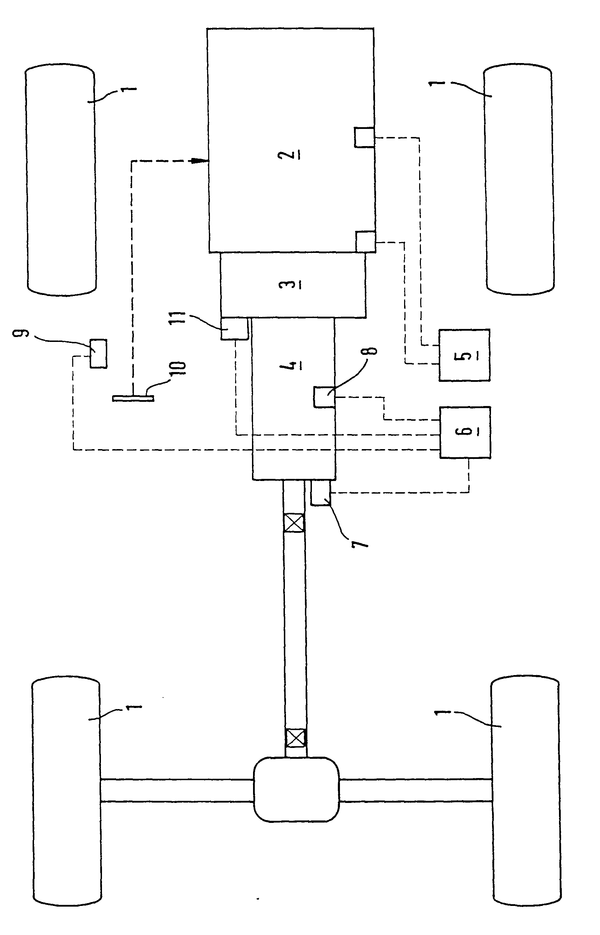

Im übrigen wird hinsichtlich bevorzugter Merkmale der Erfindung auf die Ansprüche sowie die nachfolgende Erläuterung der Zeichnung verwiesen, anhand der besonders vorteilhafte Ausführungsformen beschrieben werden.

Dabei zeigt die einzige Figur in schematisierter Darstellung ein Kraftfahrzeug mit erfindungsgemäß gesteuerter automatischer Kupplung und manuell geschaltetem Getriebe.

Vom Kraftfahrzeug sind im wesentlichen nur die vorderen und hinteren Räder 1 dargestellt, wobei im gezeigten Beispiel die Hinterräder vom Fahrzeugmotor 2 über eine automatisch betätigte Kupplung 3 und ein manuell geschaltetes Getriebe 4 angetrieben werden.

Der Motor 2 besitzt eine automatische Motorregelung 5, die in grundsätzlich bekannter Weise arbeitet und zumindest dafür sorgt, daß die Ist-Betriebsdrehzahl des Motors 2 auch bei größerer Belastung des Motors nicht ohne weiteres unter eine Mindestsolldrehzahl - in der Regel die Leerlaufsolldrehzahl des Motors - abfallen kann.

Des weiteren ist für die Kupplung 3 eine Regelschaltung 6 vorgesehen, die gegebenenfalls mit der Motorregelung 5 zu einer einzigen Regeleinheit zusammengefaßt sein kann.

Eingangsseitig ist die Regelschaltung 6 (bzw. die Regeleinheit) mit einem Sensor 7 für die Fahrgeschwindigkeit, z.B. einem Tachometer des Fahrzeuges, verbunden. Darüber hinaus kann die Regelschaltung 6 (bzw. die Regeleinheit) eingangsseitig mit weiteren Sensoren verbunden sein, beispielsweise einem Sensor 8, dessen Signale die jeweils eingelegte Getriebestufe bzw. den jeweils eingelegten Gang des Getriebes 3 wiedergeben.

Ein weiterer, auf der Eingangsseite der Regelschaltung 6 (bzw. der Regeleinheit) angeordneter Sensor 9 erzeugt Signale, die die Stellung des vom Fahrer betätigten Fahrpedals 10 zur Steuerung der Motorleistung wiedergeben.

Ausgangsseitig ist die Regelschaltung 6 (bzw. die Regeleinheit) mit einem vorzugsweise elektrischen Stellmotor 11 verbunden, der die Kupplung 3 betätigt, so daß je nach Stellhub des Motors 11 die Kupplung 3 entweder vollständig geöffnet oder vollständig geschlossen oder auf unterschiedliche übertragbare Drehmomente eingestellt wird.

Sobald die Regelschaltung 6 (bzw. die Regeleinheit) aufgrund der Signale der Sensoren 7 bis 9 erkennt, daß ein für das Anfahren des Fahrzeuges geeigneter Gang des Getriebes 4 - in der Regel 1. Vorwärtsgang bzw. Rückwärtsgang - eingelegt ist und der Fahrer das Fahrpedal 10 nicht betätigt und außerdem eine Fahrgeschwindigkeit unterhalb eines geringen Schwellwertes der Geschwindigkeit vorliegt, wird der Stellmotor 11 so betätigt, daß sich eine vorgegebene geringe Fahrgeschwindigkeit unterhalb des genannten Schwellwertes einstellt.

Auf diese Weise ist unter praktisch allen Betriebsumständen ein gleichartiges Kriechverhalten des Fahrzeuges gewährleistet, insbesondere unabhängig davon, ob das Fahrzeug auf ebener Fahrbahn oder auf einer Steigung fährt bzw. kriecht.

## Patentansprüche

1. Steuerung einer automatischen Kupplung zwischen Motor, insbesondere Verbrennungsmotor (2), und Antriebstrang (1,4) eines Kraftfahrzeuges bei Kriechphasen, insbesondere Anfahrphasen bzw. Betriebsphasen mit Übergängen zwischen sehr geringer Fahrgeschwindigkeit und Halt,
**dadurch gekennzeichnet,**
**daß**, sobald ein Steuerorgan des Motors bzw. ein Fahrpedal (10) fahrerseitig nicht betätigt wird, und das Fahrzeug eine Fahrgeschwindigkeit unterhalb eines geringen Schwellwertes hat, und ein für das Anfahren des Fahrzeuges geeigneter Gang des Getriebes (4) eingelegt ist, das Kupplungsmoment so geregelt wird, daß sich eine vorgegebene geringe Fahrgeschwindigkeit unterhalb des genannten Schwellwertes einstellt.

2. Steuerung nach Anspruch 1,
**dadurch gekennzeichnet,**
**daß** bei erhöhter Motordrehzahl die Kupplung (3) geschlossen oder in Sinne der Einhaltung einer höheren Fahrgeschwindigkeit geregelt wird.

3. Steuerung nach Anspruch 1 oder 2,
**dadurch gekennzeichnet,**
**daß** das automatisch eingestellte Kupplungsmoment bei Kriechphasen unterhalb eines vorgebbaren Schwellwertes bleibt.

4. Steuerung nach einem der Ansprüche 1 bis 3,
**dadurch gekennzeichnet,**
**daß** eine Motorregelung (5) einem Abfall der Ist-Betriebsdrehzahl des Motors (2) unter einen Mindestsollwert entgegensteuert.

## Claims

1. Control of an automatic coupling between engine, in particular an internal combustion engine (2), and drive train (1,4) of a motor vehicle during crawling phases, in particular start-up phases or operating phases with transitions between very low driving speed and stop,
**characterised in that**
immediately a control member of the engine or an accelerator pedal is not being operated and the vehicle is travelling at a speed below a low threshold value, and there is a shift to a speed of the gear system (4) capable of moving the vehicle, the coupling torque is regulated so that a predetermined low driving speed below said threshold value is set.

2. Control as claimed in claim 1,
**characterised in that**
when the engine speed increases, the coupling (3) is closed or is regulated so as to maintain a higher driving speed.

3. Control as claimed in claim 1 or 2,
**characterised in that**
the coupling torque automatically set during crawling phases remains below a pre-settable threshold value.

4. Control as claimed in one of claims 1 to 3,
**characterised in that**
an engine control (5) applies a control to prevent the actual operating speed of the engine (2) from falling below a minimum threshold value.

## Revendications

1. Commande d'un embrayage automatique entre un moteur, en particulier un moteur à combustion (2), et un train d'entraînement (1,4) d'un véhicule automobile, dans les phases de marche rampante, en particulier les phases de démarrage ou les phases de fonctionnement avec des transitions entre une vitesse de roulage très faible et l'arrêt,
**caractérisée en ce que**
dès qu'un organe de commande du moteur ou une pédale d'accélérateur (10) n'est pas actionné côté conducteur, et que le véhicule roule à une vitesse inférieure à une faible vitesse de seuil et qu'une vitesse de la boîte de vitesses (4), appropriée pour le démarrage du véhicule, est passée, le couple d'embrayage est réglé de manière que s'établisse une faible vitesse de roulage, prédéterminée, au-dessous de la valeur de seuil citée.

2. Commande selon la revendication 1, **caractérisée en ce que**, dans le cas d'une vitesse de rotation augmentée du moteur, l'embrayage (3) est fermé ou est réglé dans le sens du respect d'une vitesse de roulage plus élevée.

3. Commande selon la revendication 1 ou 2, **caractérisée en ce que** le couple à l'embrayage, réglé automatiquement, reste au-dessous d'une valeur-seuil pré-déterminable lorsque l'on se trouve dans les phases de marche rampante.

4. Commande selon l'une quelconque des revendications 1 à 3, **caractérisée en ce qu'**une régulation moteur (5) produit une commande, agissant à l'encontre d'une chute, au-dessous d'une valeur de consigne minimale, de la vitesse de rotation en fonctionnement réel du moteur (2).
